Europäisches Patentamt

European Patent Office

Office européen des brevets

(19)

(11) **EP 0 590 002 B1**

(12) **FASCICULE DE BREVET EUROPEEN**

(45) Date de publication et mention
de la délivrance du brevet:
**28.02.1996 Bulletin 1996/09**

(21) Numéro de dépôt: 92912847.8

(22) Date de dépôt: 19.06.1992

(51) Int. Cl.$^6$: **B29C 55/00**, B29C 55/06
// B29K27:18

(86) Numéro de dépôt international: **PCT/FR92/00560**

(87) Numéro de publication internationale: **WO 93/00213**
**(07.01.1993 Gazette 1993/02)**

(54) **PROCEDE DE FABRICATION D'UN RUBAN DE POLYTETRAFLUOROETHYLENE DE GRANDE POROSITE, RUBAN POREUX OBTENU ET UTILISATION DUDIT RUBAN**

VERFAHREN ZUR HERSTELLUNG EINES POLYTETRAFLUOROETHYLENBANDES HOHER POROSITÄT, DADURCH HERGESTELLTES PORÖSES BAND UND SEINE VERWENDUNG

METHOD FOR PRODUCING A HIGH-POROSITY POLYTETRAFLUOROETHYLENE TAPE, POROUS TAPE THEREBY OBTAINED AND USES THEREOF

(84) Etats contractants désignés:
**AT BE CH DE ES FR GB IT LI NL SE**

(30) Priorité: **21.06.1991 FR 9107683**

(43) Date de publication de la demande:
**06.04.1994 Bulletin 1994/14**

(73) Titulaire: **AXON'CABLE**
**F-51210 Montmirail (FR)**

(72) Inventeur: **PEREZ, Sophie**
**F-51210 Montmirail (FR)**

(74) Mandataire: **Hasenrader, Hubert et al**
**F-75340 Paris Cédex 07 (FR)**

(56) Documents cités:
GB-A- 2 025 835    US-A- 3 953 566
US-A- 4 110 392    US-A- 4 902 423

• **Section Ch, Derwent Publications Ltd., London, GB; Class A, AN 82-36216E & JP,A,57 051 450 (JUNKO-SHA) 26 Mars 1982 voir abrégé**

## Description

La présente invention concerne un procédé de fabrication d'un ruban de polytétrafluoroéthylène (PTFE) de très grande porosité, le ruban poreux ainsi obtenu et son utilisation notamment dans un câble coaxial.

Il existe déjà des rubans de PTFE poreux dont la masse volumique est voisine de 0,2 g/cm$^3$, ce qui correspond à une constante diélectrique ($\varepsilon$) d'environ 1,09.

Ces rubans de PTFE sont fabriqués par des procédés d'étirage traditionnels qui comportent une étape d'étirage unique et continue, à des températures nettement inférieures à la température de fusion (point de gel) du PTFE. Ces procédés se heurtent à une limite de masse volumique autour de 0,3 g/cm$^3$. Ainsi, lors de l'étirage à l'approche de cette valeur, il se produit une rupture du ruban.

Pour atteindre des masses volumiques plus faibles, des procédés connus comprennent au moins deux étirages successifs impliquant des modifications de la structure du PTFE qui passe d'un état où le degré de cristallinité est élevé à un état où la fraction amorphe est prépondérante.

Ce brusque changement d'état est provoqué par une opération de frittage effectué après les étirages à une température voisine de la température de fusion (point de gel) du ruban cru de PTFE.

La structure est bloquée à l'état amorphe par une étape de refroidissement rapide.

Le US-A-3 953 566 décrit un produit en PTFE poreux de densité inférieure à 0,2g/cm$^3$ obtenu par étirage à une température comprise entre 35°C et 327°C à partir d'une forme extrudée. Cette forme est obtenue à partir d'une résine ayant un degré de cristallinité très élevé. Mais ensuite, ce produit étiré est bloqué dans une phase amorphe par élévation à une température supérieure à 327°C afin d'obtenir une bonne résistance mécanique.

Il faut noter que la constante diélectrique du PTFE est reliée à sa porosité, sa densité ou sa masse volumique par la formule = (1 + d/3)/(1- d/12,6) où d est la densité.

D'autre part, la relation entre la porosité P et la densité d (ou la masse volumique en g/cm$^3$) est la suivante :

$$P=(1,1-d/2)/1,1.$$

Par suite, une des utilisations importantes de ce ruban se trouve dans les revêtements isolants de câble notamment coaxiaux.

La présente invention a pour but de préparer d'une manière simplifiée un ruban de PTFE de grande porosité dont la masse volumique est plus faible que celle obtenue précédemment.

Ce but est atteint selon l'invention par un procédé de fabrication d'un ruban de PTFE dont la masse volumique est inférieure ou égale à 0,2g/cm3, caractérisé en ce qu'on effectue un premier étirage d'un ruban cru de PTFE en chauffant pour abaisser la masse volumique entre 0,7g/cm3 et 0,3g/cm3, puis on effectue au moins une étape du type comportant une phase de stabilisation du ruban sans changement d'état du PTFE, par passage dans un four à une température et pendant une durée qui sont fonctions de la masse à stabiliser en maintenant le ruban sous tension afin que sa masse volumique n'augmente pas suivie d'une phase d'étirage sous chauffage pour que la masse volumique du ruban atteigne une valeur comprise entre 0,2 et 0,12 g/cm3.

Selon une caractéristique avantageuse de l'invention, les étirages sont des étirages dans le sens de défilement du ruban.

Selon une autre caractéristique, la température de la phase de stabilisation est comprise entre 150°C et 250°C.

Un autre objet de l'invention est un ruban de PTFE poreux de structure cristalline dont la masse volumique est comprise entre 0,2 et 0,12 g/cm3.

L'invention vise également l'utilisation du ruban de grande porosité dans un revêtement de câble coaxial.

Le procédé de l'invention permet ainsi d'obtenir de façon simple un ruban de PTFE de grande porosité dont les propriétés diélectriques sont améliorées.

Cette simplification du procédé est due notamment au fait que l'invention permet d'utiliser comme matière première des rubans de PTFE cru quel qu'ait été leur mode de fabrication et les propriétés de leurs constituants (degré de cristallinité de la résine de départ, grade de ladite résine, nature des lubrifiants...).

De plus, le procédé de l'invention permet de réduire les variations dimensionnelles du ruban dues à l'étirage.

Pour un même rapport d'étirage total, c'est-à-dire du rapport entre les vitesses du ruban respectivement à la sortie et à l'entrée du dispositif d'étirage, on obtient ainsi avec le procédé de l'invention une plus grande porosité ou une densité plus faible que celle obtenue avec les procédés de l'art antérieur ou bien à densité ou porosité égale les variations d'épaisseur et de largeur sont moins importantes que dans les procédés courants.

Le ruban de l'invention est utilisé de manière avantageuse en tant que revêtement isolant et léger, notamment pour un câble coaxial en lui conférant des qualités de propagation du signal plus rapides.

L'invention sera mieux comprise à la lecture de la description qui va suivre accompagnée des dessins sur lesquels :

-   les figures 1a-1d représentent les courbes du rapport d'étirage en fonction de la densité dans le cas d'un procédé d'étirage traditionnel pour un domaine de densités moyennes ;

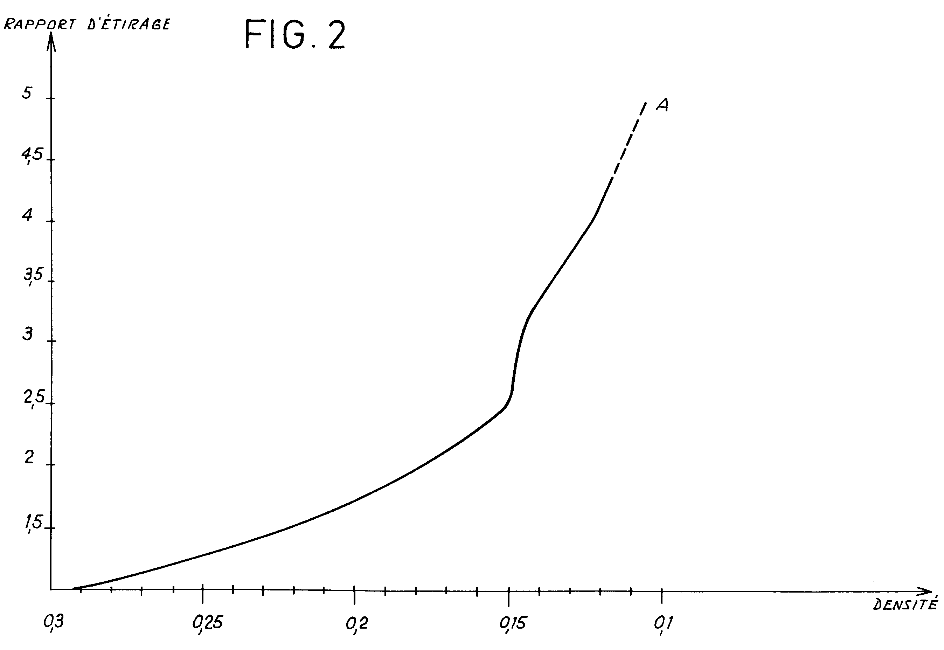

- la figure 2 représente la courbe du rapport d'étirage en fonction de la densité dans un domaine de faibles densités (inférieures à 0,3) en appliquant le procédé de l'invention ;
- les figure 3a et 3b représentent deux types de comportement du ruban après les phases d'étirage sous analyse thermomécanique ;
- la figure 4 représente une illustration schématique du procédé de l'invention.

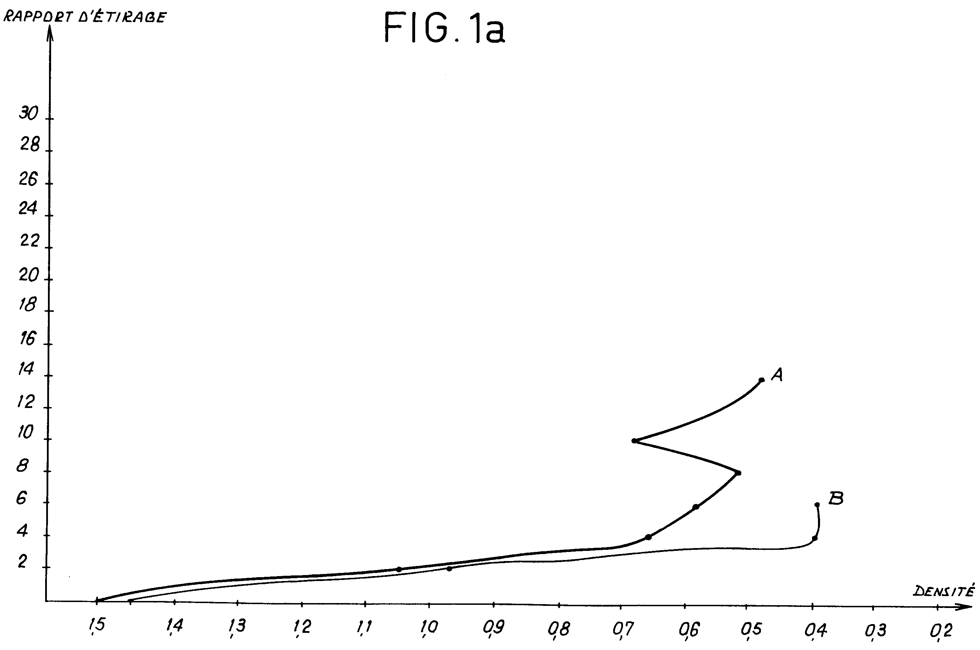

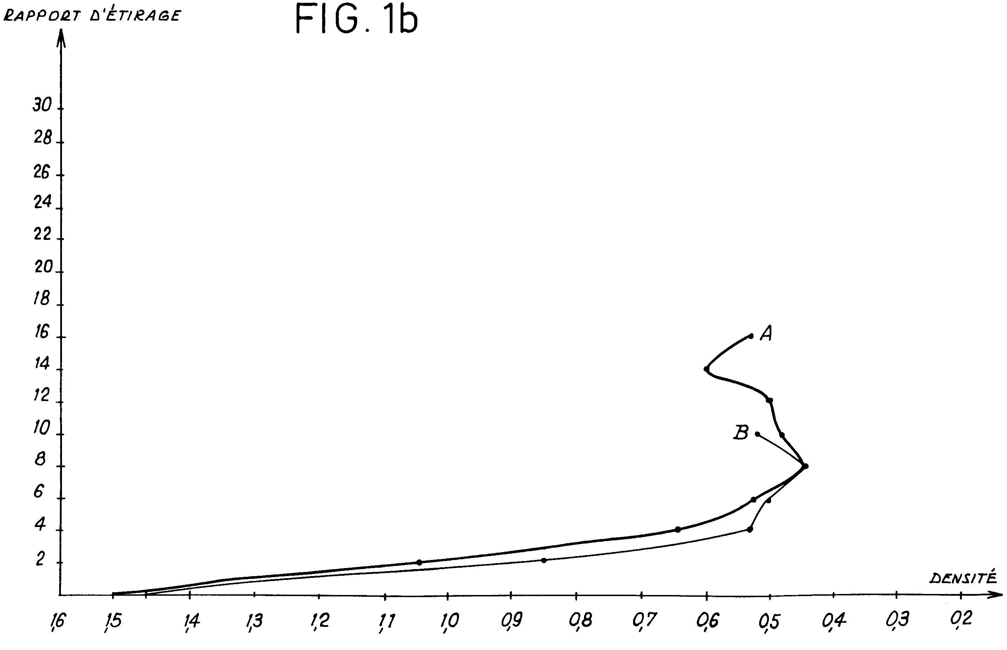

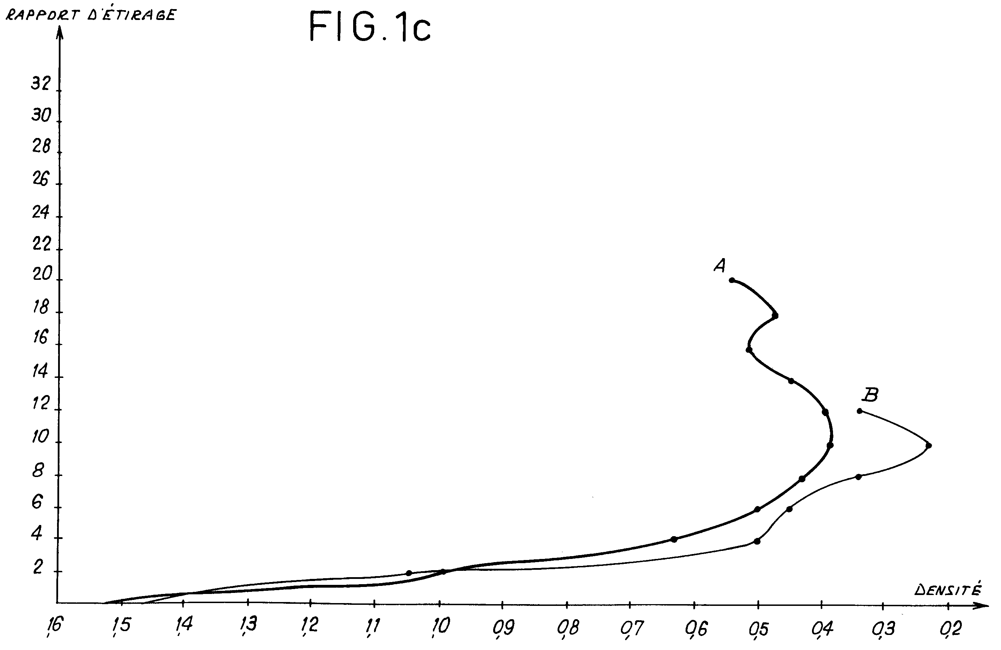

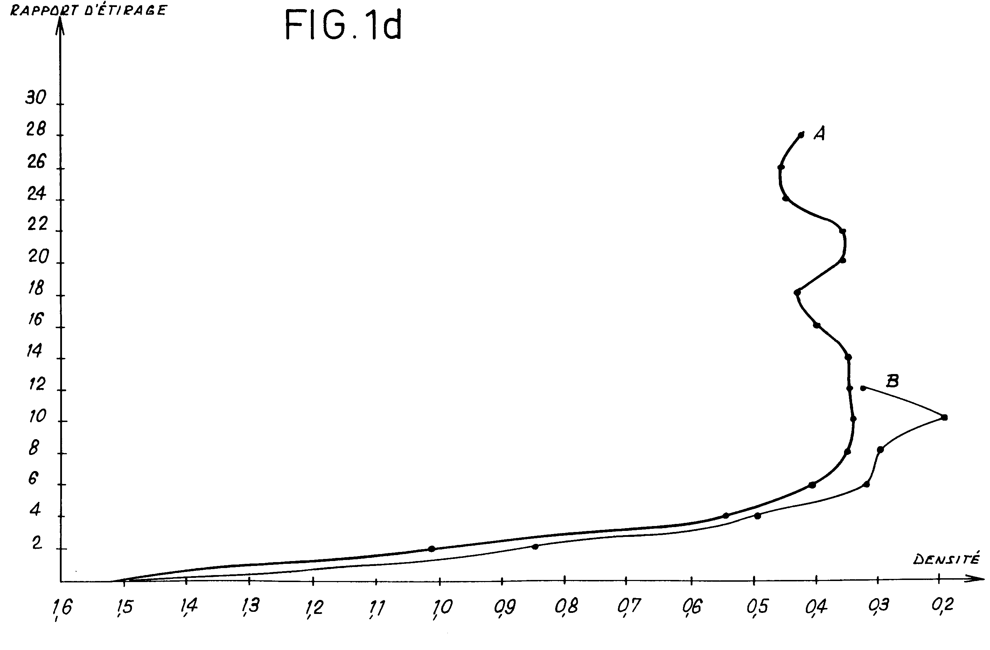

les figures 1a-1d illustrent le comportement du ruban notamment, la variation de sa densité en fonction du rapport d'étirage.

Les courbes des figures 1a-1d illustrent les résultats des essais pratiqués en référence aux tableaux IIa et IIb. Ces essais mettent en évidence une limite inférieure de densité ou de masse volumique voisine de 0,3. Cette limite peut être approchée d'une première façon par un procédé comprenant un étirage unique et continu réalisé avec un apport calorifique important à la température de fusion du PTFE, c'est-à-dire en provoquant un changement d'état du PTFE qui passe alors d'un état où le degré de cristallinité est élevé à un état où la fraction amorphe est prépondérante.

Un autre procédé connu pour approcher cette limite consiste à effectuer une série d'étirages successifs généralement d'au moins trois étirages, permettant d'abaisser la densité par paliers.

Le procédé de l'invention permet de franchir cette limite de densité ou de masse volumique d'une valeur d'environ 0,3g/cm3 lors de l'étirage d'un ruban cru de PTFE et d'atteindre des masses volumiques aussi faibles que 0,12 g/cm3 sans produire un quelconque changement d'état du PTFE qui conserve ainsi son degré de cristallinité et les propriétés diélectriques y afférentes.

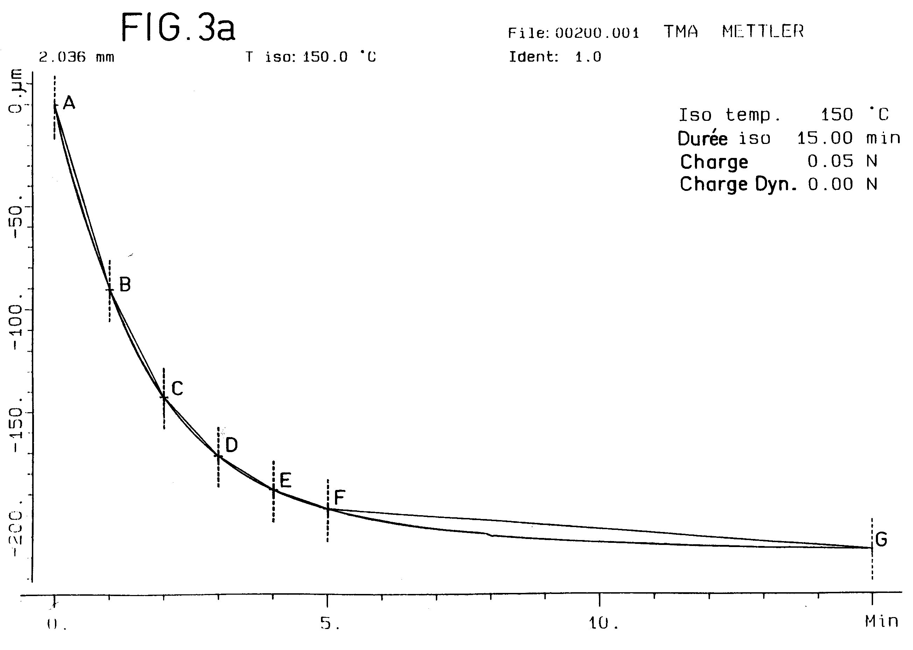

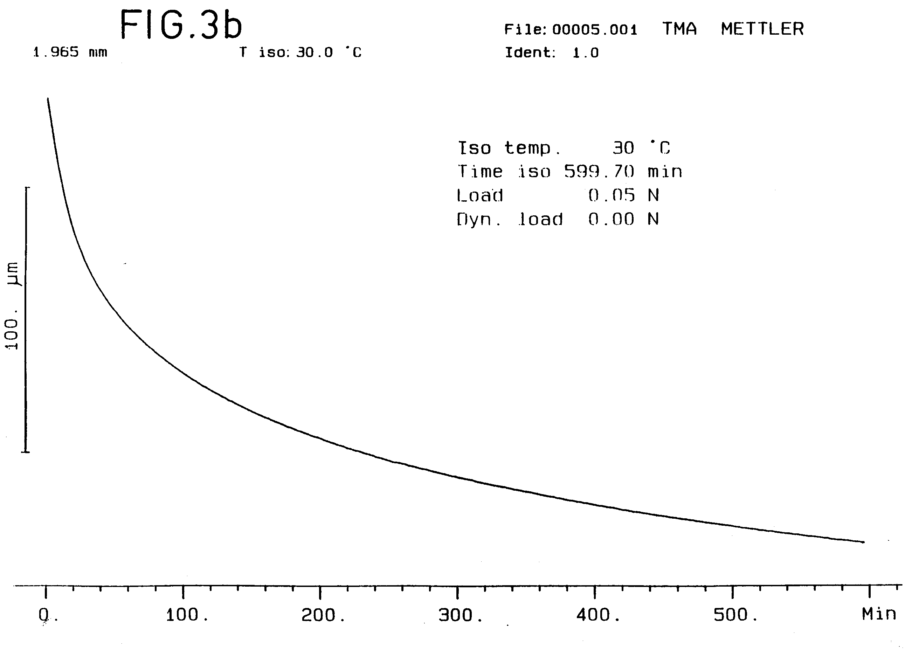

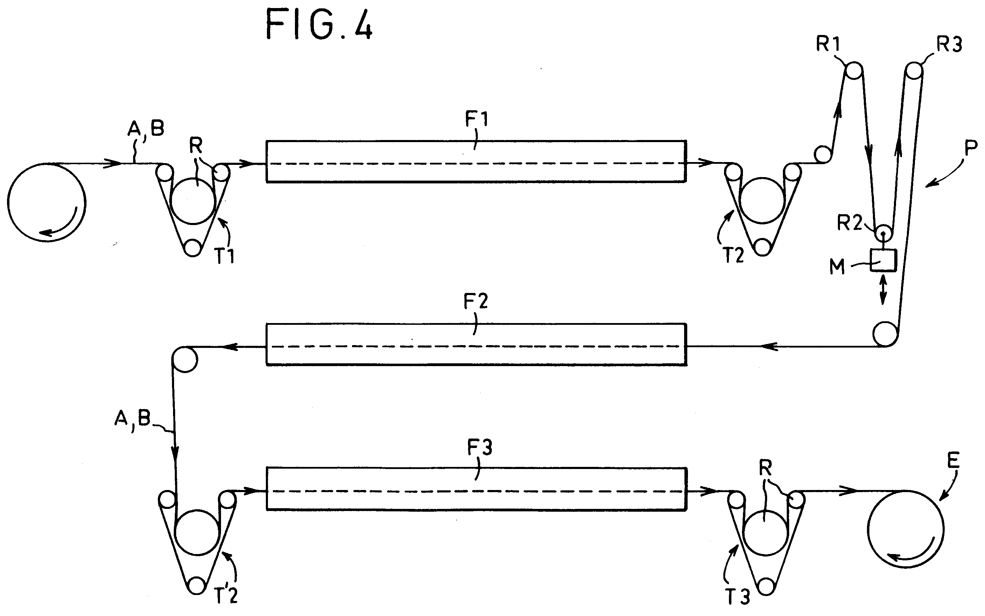

Selon l'invention, comme illustré par les exemples ci-après et les figures 3a,3b et 4, on effectue d'abord un premier étirage d'un ruban cru de PTFE de masse volumique de départ d'environ 1,7 g/cm3 par passage sur deux jeux d'organes de tirages T1,T2 éventuellement chauffés, placés respectivement à l'entrée et à la sortie d'un four F1 dont la température n'est pas suffisante pour permettre au ruban d'atteindre son point de fusion. Cette température est réglée de telle sorte que la résistance à l'allongement du ruban à la sortie du four F1 soit minimale. La résistance à l'allongement est mesurée par exemple au moyen d'une jauge de contrainte montée sur le palier de l'organe de tirage T2 constitué par exemple d'une roue d'entraînement.

Ce premier étirage permet d'atteindre une masse volumique comprise entre 0,7g/cm3 et 0,3 g/cm3. L'étape suivante consiste à effectuer une stabilisation du ruban, sans changement d'état, par simple passage dans un four F2 à une température et pendant une durée (ou à une vitesse de défilement du ruban) qui dépendent de la masse du ruban ou de la longueur massique dudit ruban à stabiliser en appliquant à son extrémité une tension mécanique telle que la masse volumique du ruban n'augmente pas pendant le passage dans le four F2.

La tension mécanique est obtenue notamment au moyen d'un accumulateur à tension réglable P représenté sur la figure 4.

Cet appareil P a pour but de réaliser une réserve d'attente en ruban afin de compenser l'écart de vitesse entre les tirages T2 et T'2.

L'appareil P comprend trois rouleaux $R_1$-$R_2$-$R_3$.

Les rouleaux R1 et R3 sont fixes tandis que le rouleau R2 peut se déplacer verticalement en étant relié à une masse M.

La dénivellation h entre la position des rouleaux (R1-R3) et celle du rouleau R2 correspond à une réserve de ruban dont la longueur est égale à 2 h.

La disposition précédente peut être utilisée en séries suivant la longueur de ruban à mettre en réserve.

La masse M engendre une tension utilisée pour la composante mécanique de la phase de stabilisation du ruban.

Le couple température-durée de la composante thermique de la phase de stabilisation traduit en fait un apport d'énergie calorifique par longueur massique de ruban.

On effectue ensuite un second étirage obtenu par des moyens analogues à ceux mis en oeuvre lors du premier étirage avec passage dans un four F3 dont la température est déterminée selon les mêmes critères que pour le passage dans F1.

On peut atteindre ainsi en une ou plusieurs étapes successives du type stabilisation/étirage une masse volumique de l'ordre de 0,12 g/cm3 correspondant à une porosité de 94,5 % d'air et une constante diélectrique d'environ 1,04 sans modification de l'état initial du PTFE.

Le ruban poreux ainsi obtenu est ensuite stocké sur un enrouleur E situé en bout de ligne.

D'une manière avantageuse, les phases d'étirages sont réalisées dans le sens d'avancement du ruban.

Grâce au procédé de l'invention comprenant des opérations d'étirage séparées par une phase de stabilisation, le degré de cristallinité du PTFE est sensiblement conservé.

Les essais suivants dont les résultats figurent sur les tableaux illustrent des modes de réalisation de l'invention.

Les tableaux IA et IB montrent l'influence du chauffage (température et durée ou apport d'énergie calorifique) sur la densité du ruban obtenu après un seul étirage (pour deux rubans de provenance ou de fabrication différentes A et B) la durée du chauffage est proportionnelle à la longueur du ou des fours utilisés lorsque la vitesse de défilement du ruban est sensiblement constante (VOIR TABLEAU I).

Le tableau II montre l'existence d'une limite inférieure à l'étirement du ruban et donc à sa densité ou à sa masse volumique avec un seul étirage quelle que soit la température (pour deux rubans A et B). Il ressort de ces tableaux que la limite de rupture pour des rapports d'étirage de 28 à 6 se situe à une masse volumique généralement comprise entre 0,2 et 0,6 g/cm3 (VOIR TABLEAU II).

Le tableau III montre l'influence de la température et du nombre des étirages sur la limite de rupture (pour deux rubans A et B) il apparaît que la limite a tendance à baisser lorsque la température ou le nombre d'étirages augmente (VOIR TABLEAU III).

Le tableau IV montre les résultats obtenus avec un nombre d'étirage variant de 1 à 4. Il apparaît que la limite de rupture la plus basse est obtenue avec deux étirages successifs (VOIR TABLEAU IV).

De l'expérience et de l'analyse du ruban analyseur thermomécanique il ressort que le ruban travaille dans le temps après l'étirage sous le fait de contraintes de tensions internes. Expérimentalement, il a été trouvé qu'un apport calorifique permet de diminuer le temps de travail du ruban et d'accélérer la disparition des tensions internes. Cet apport permet d'effectuer un deuxième étirage dans les conditions du premier.

Les figures 3a et 3b illustrent le comportement du ruban après étirage lorsqu'il est soumis à un apport d'énergie calorifique correspondant à des températures respectivement de 150°C et 30°C.

Le tableau VIII présente des valeurs du coefficient de retrait (obtenu à partir de la pente de la courbe) en des points particuliers de la courbe.

Le tableau IX présente les valeurs de pourcentage de retrait en fonction du temps à 150°C.

Il apparaît que le retour à un état où les contraintes internes sont minimales est plus rapide à 150°C l'efficacité du procédé sera donc améliorée par l'introduction entre deux étapes successives d'étirage d'une phase de stabilisation par apport d'énergie calorifique.

Le tableau V montre l'importance que revêt le maintien en tension du ruban après la première étape d'étirage et pendant la phase de stabilisation ou de traitement thermique.

Il apparaît que lorsque le maintien en tension est tel que la masse volumique n'augmente pas pendant le traitement thermique, la masse volumique finale ou la limite de rupture du deuxième étirage est plus basse, à même température, qu'en absence de tension (voir TABLEAU V).

Le tableau VI montre l'influence (sur le même ruban que celui du tableau V) de la température (ou de l'apport calorifique) lors de la phase de stablisation intermédiaire avec maintien de la tension du ruban et vitesse de défilement dans le four F2 ou durée du chauffage constante.

Le meilleur résultat est obtenu autour de 175°C (VOIR TABLEAU VI).

Le tableau VII résume l'influence des divers facteurs sur la masse volumique ou la densité du ruban après application de divers modes d'étirage (VOIR TABLEAU VII), avec ou sans stabilisation.

L'exemple VIIe-4 aboutit au meilleur résultat avec une masse volumique finale de 0,12 g/cm3.

Tableau I

Ruban B    do = 1,58

| Rapport d'étirage $V_2/V_1$ | Longueur de four L | 1 m 100°C | 2 m 100°C | 1 m 125°C | 2 m 125°C | 1 m 150°C | 2 m 150°C |
| | Température T | | | | | | |
|---|---|---|---|---|---|---|---|
| 5/1 | | 0,47 | 0,39 | 0,41 | 0,37 | 0,365 | 0,36 |
| 7,5/1 | | 0,36 | 0,27 | 0,39 | 0,28 | 0,31 | 0,25 |
| 10/1 | | rupture | 0,32 | 0,38 | 0,29 | 0,30 | 0,27 |

Ruban A    do = 1,52

| Rapport d'étirage | Longueur de four L | 2 m 125°C |
| | Température T | |
|---|---|---|
| 2,5/0,5 | | 0,52 |
| 3,5/0,5 | | 0,50 |
| 5/0,5 | | 0,38 |

Tableau IIA

do = 1,52

Ruban A

| Rapport d'étirage | Longueur de four Température | 2 m 125°C | 2 m 150°C | 2 m 175°C | 2 m 200°C |
|---|---|---|---|---|---|
| 2/1 | | 1,05 | 1,04 | 0,99 | 1,01 |
| 4/1 | | 0,66 | 0,64 | 0,63 | 0,54 |
| 6/1 | | 0,594 | 0,53 | 0,50 | 0,41 |
| 8/1 | | 0,518 | 0,45 | 0,43 | 0,35 |
| 10/1 | | 0,68 | 0,48 | 0,38 | 0,34 |
| 12/1 | | 0,48 | 0,502 | 0,39 | 0,35 |
| 14/1 | | rupture | 0,597 | 0,45 | 0,35 |
| 16/1 | | | 0,53 | 0,52 | 0,40 |
| 18/1 | | | rupture | 0,45 | 0,43 |
| 20/1 | | | | 0,52 | 0,36 |
| 22/1 | | | | rupture | 0,36 |
| 24/1 | | | | | 0,45 |
| 26/1 | | | | | 0,46 |
| 28/1 | | | | | 0,42 |
| 30/1 | | | | | rupture |

Tableau IIB

Ruban B

| 2 m 125°C | 2 m 150°C | 2 m 175°C | 2 m 200°C | Rapport d'étirage do = 1,58 |
|---|---|---|---|---|
| 0,97 | 0,86 | 1,04 | 0,84 | 2/1 |
| 0,53 | 0,53 | 0,50 | 0,49 | 4/1 |
| 0,39 | 0,48 | 0,45 | 0,32 | 6/1 |
| 0,39 | 0,44 | 0,34 | 0,30 | 8/1 |
| rupture | 0,52 | 0,23 | 0,19 | 10/1 |
| | rupture | 0,32 | 0,33 | 12/1 |
| | | rupture | rupture | 14/1 |

Tableau III

| Rapport d'étirage | Longueur du four<br>Température | 2 m<br>125°C | 2 m<br>150°C |
|---|---|---|---|
| 1 étirage     5/1 | | 0,41 | 0,37 |
| 2 étirages 2,5/1+2/1 | | 0,37 | 0,37 |
| 1 étirage 7,5/1 | | 0,39 | 0,31 |
| 2 étirages 2,5/1+3/1 | | 0,30 | 0,27 |
| 1 étirage 10/1 | | 0,38 | 0,30 |
| 2 étirages 2,5/1+4/1 | | 0,26 | 0,26 |
| 1 étirage 12,5/1 | | 0,32 | 0,31 |
| 2 étirages 2,5/1+5/1 | | 0,24 | 0,23 |
| 1 étirage 15/1 | | rupture | - |

Tableau IV

Ruban do = 1,67

| Rapport d'étirage | Longueur du four Température | 2 m 175°C | 2 m 150°C | 2 m 125°C |
|---|---|---|---|---|
| 1 étirage   12/1 | | 0,40 | - | - |
| 2 étirages 6/1+2/1 | | 0,36 | - | - |
| 2 étirages 2/1+6/1 | | 0,33 | - | - |
| 2 étirages 4/1+3/1 | | rupture | - | - |
| 2 étirages 3/1+4/1 | | 0,28 | - | - |
| 3 étirages 3/1+2/1+2/1 | | 0,33 | - | - |
| 4 étirages 2/1+2/1+2/1+1,5/1 | | - | 0,39 | - |
| 3 étirages 3/1+2/1+2/1 | | - | - | 0,40 |
| 4 étirages 2/1+2/1+2/1+1,5/1 | | - | - | 0,45 |

EP 0 590 002 B1

## Tableau V

Tensions de stabilisation

| Etapes | Rapport d'étirage | Nulle | Moyenne | Forte | Très forte |
|---|---|---|---|---|---|
| 1$^{er}$ étirage | 3/1 | 0,56 | 0,66 | 0,62 | 0,63 |
| Stabilisation | - | 0,68 | 0,65 | 0,61 | 0,33 |
| 2$^e$ étirage | 3/1 | 0,30 | 0,27 | 0,27 | 0,27 |

do = 1,50

Longueur de four 2 m

Température 125$^o$C

## Tableau VI

Température de stabilisation/

vitesse

| Etapes | 2 m/150$^o$C 4 m/min | 2 m/175$^o$C 6 m/min | 2 m/200$^o$C 8 m/min |
|---|---|---|---|
| 1$^{er}$ étirage 3/1 | 0,74 | 0,64 | 0,66 |
| Stabilisation | 0,63 | 0,52 | 0,52 |
| 2$^e$ étirage 3/1 | 0,26 | 0,22 | 0,24 |

Ruban de départ

identique au

tableau V avec

tension

EP 0 590 002 B1

EP 0 590 002 B1

Tableau VII

| Ex. | 1$^{er}$ étirage 2 m/175$^{o}$C | Densité | Stabilisation Vitesse | Four Temp. | Densité | 2$^e$ étirage 2 m/175$^{o}$C | Densité finale |
|---|---|---|---|---|---|---|---|
| a1 | 5/1 | 0,44 | | | | 2,5/1 | 0,21 |
| a2 | " | " | Stabilisation air ambiant 5 h | | | 2,9/1 | rupture à 0,19 |
| a3 | " | " | Stabilisation air ambiant 5 h | | | 2,9/1 | rupture à 0,18 |
| b1 | 5/1 | 0,42 | 1 m/min | 2 m 175$^{o}$C | 0,36 | 2,6/1 | 0,19 |
| b2 | " | " | " | " | " | 2,9/1 | rupture à 0,16 |
| c1 | 7/1 | 0,31 | | | | 2,5/1 | 0,19 |
| c2 | " | " | | | | 3/1 | rupture |
| c3 | " | " | 1 m/min | 2 m 175$^{o}$C | 0,40 | 2,5/1 | 0,16 |
| c4 | " | " | " | " | " | 3/1 | 0,16 |
| c5 | " | " | " | " | " | 3,5/1 | rupture à 0,15 |
| d1 | 8/1 | 0,312 | | | | 3/1 | 0,18 |

EP 0 590 002 B1

## Tableau VII (suite)

| | | | | | | | |
|---|---|---|---|---|---|---|---|
| d2 | | | | | | 3,5/1 | rupture |
| d3 | " | " | | | | 2,5/1 | 0,17 |
| d4 | " | " | | | | 3/1 | 0,13 |
| d5 | " | " | | | | 3,5/1 | non mesurable |
| e1 | 8/1 | 0,293 | 1 m/min | 2 m 175$^{O}$C | 0,235 | 2/1 | 0,16 |
| e2 | " | " | " | " | " | 2,5/1 | 0,15 |
| e3 | " | " | " | " | " | 3,1/1 | 0,14 |
| e4 | " | " | " | " | " | 4,1/1 | 0,12 |
| e5 | " | " | | | | 4,6/1 | non mesurable |
| e6 | " | " | | | | 2,5/1 | 0,18 |
| e7 | " | " | | | | 3/1 | rupture |

Tableau VIII

| Longueur initiale de l'échantillon 2,036 mm) | |
|---|---|
| Point de la courbe | Coefficient de retrait (ppm/s) |
| A | - 7790.7 |
| B | - 583.8 |
| C | - 257.2 |
| D | - 136.8 |
| E | - 76.2 |
| F | - 15.9 |
| G | -- |

Tableau IX

| % retrait | Temps (min) |
|---|---|
| 10 % | 1,18 |
| 30 | 1,61 |
| 50 | 2,18 |
| 70 | 3,06 |
| 90 | 4,86 |

## Revendications

1. Procédé de fabrication d'un ruban de PTFE dont la masse volumique est inférieure ou égale à 0,2g/cm³, caractérisé en ce qu'on effectue un premier étirage d'un ruban cru de PTFE en chauffant pour abaisser la masse volumique entre 0,7g/cm³ et 0,30/cm3 puis on effectue au moins une étape du type comportant une phase de stabilisation du ruban sans changement d'état du PTFE, par passage dans un four à une température et pendant une durée qui sont fonctions de la masse à stabiliser en maintenant le ruban sous tension afin que sa masse volumique n'augmente pas suivie d'une phase d'étirage sous chauffage pour que la masse volumique du ruban atteigne une valeur comprise entre 0,2 et 0,12g/cm³.

2. Procédé de fabrication selon la revendication 1, caractérisé en ce que les étirages sont des étirages dans le sens de défilement du ruban.

3. Procédé selon le revendication 1 ou 2, caractérisé en ce que la température de la phase de stabilisation est comprise entre 150°C et 250°C.

4. Procédé selon l'une des revendications précédentes, caractérisé en ce que la durée du passage dans le four de stabilisation est comprise entre 5 s et 2 mn.

5. Procédé selon les revendications 3 et 4, caractérisé en ce que la température est de 175°C et la durée est de 2 mn.

6. Procédé selon l'une des revendications précédentes, caractérisé en ce qu'on effectue une seule étape de stabilisation thermique/étirage.

7. Procédé selon l'une des revendications précédentes, caractérisé en ce que le rapport d'étirage pour la première étape d'étirage est compris entre 5/1 et 20/1.

8. Procédé selon la revendication 7, caractérisé en ce que le rapport d'étirage pour la première étape d'étirage est de 8/1.

9. Procédé selon l'une des revendications précédentes, caractérisé en ce que le rapport d'étirage pour la seconde étape d'étirage est de 4/1.

10. Ruban de PTFE poreux de structure cristalline dont la masse volumique est comprise entre 0,2 et 0,12 g/cm³.

**Claims**

1. Method of manufacturing a PTFE tape whose density is less than or equal to 0.2 g/cm³, the method being characterized in that a raw PTFE tape is subjected to a first step of stretching while being heated so as to reduce its density to within the range 0.7 g/cm³ to 0.30 g/cm³, after which at least one step is performed of the type including a stage during which the tape is stabilized without changing the state of the PTFE by being passed through an oven at a temperature and for a duration that are functions of the mass to be stabilized while keeping the tape under tension so that its density does not increase, followed by a stage of stretching under heating so that the density of the tape reaches a value lying in the range 0.2 g/cm³ to 0.12 g/cm³.

2. Manufacturing method according to claim 1, characterized in that the stretching passes comprise stretching in the travel direction of the tape.

3. Method according to claim 1 or 2, characterized in that the temperature of the stabilization stage lies in the range 150°C to 250°C.

4. Method according to one of the preceding claims, characterized in that the duration of its passage through the stabilization oven lies in the range 5 seconds to 2 minutes.

5. Method according to claims 3 and 4, characterized in that the temperature is 175°C and the duration is 2 minutes.

6. Method according to one of the preceding claims, characterized in that a single step of thermal stabilization/stretching is performed.

7. Method according to one of the preceding claims, characterized in that the stretching ratio for the first step of stretching lies in the range 5/1 to 20/1.

8. Method according to claim 7, characterized in that the stretching ratio for the first step of stretching is 8/1.

9. Method according to one of the preceding claims, characterized in that the stretching ratio for the second step of stretching is 4/1.

10. Porous PTFE tape of crystalline structure whose density lies in the range 0.2 g/cm³ to 0.12 g/cm³.

**Patentansprüche**

1. Verfahren zur Herstellung eines PTFE-Bandes, dessen Volumenmasse Kleiner oder gleich 0,2 g/cm³ ist, dadurch gekennzeichnet, daß ein erstes Recken eines rohen PTFE-Bandes unter Beheizung durchgeführt wird, um die Volumenmasse auf einen Wert zwischen 0,7 g/cm³ und 0,30 g/cm³ zu vermindern, und anschließend mindestens ein Schritt durchgeführt wird, der eine Phase der Stabilisierung des Bandes ohne Veränderung des Zustands des PTFE durch das Durchlaufen eines Ofens bei einer Temperatur und während einer Zeitdauer umfaßt, die von der zu stabilisierenden Masse abhängen, wobei das Band unter Spannung gehalten wird, damit seine Volumenmasse nicht wächst, gefolgt von einer Reckphase unter Beheizung, damit die Volumenmasse des Bandes einen Wert zwischen 0,2 und 0,12 g/cm³ erreicht.

2. Herstellungsverfahren nach Anspruch 1, dadurch gekennzeichnet, daß das Recken in Durchlaufrichtung des Bandes erfolgt.

3. Verfahren nach Anspruch 1 oder 2, dadurch gekennzeichnet, daß die Temperatur der Stabilisierungsphase zwischen 150°C und 250°C liegt.

4. Verfahren nach einem der vorhergehenden Ansprüche, dadurch gekennzeichnet, daß die Dauer des Durchlaufs durch den Ofen zur Stabilisierung zwischen 5 s und 2 min beträgt.

5. Verfahren nach den Ansprüchen 3 und 4, dadurch gekennzeichnet, daß die Temperatur 175°C ist und die Dauer 2 min ist.

6. Verfahren nach einem der vorhergehenden Ansprüche, dadurch gekennzeichnet, daß man einen einzigen Schritt der thermischen Stabilisierung/Reckung durchführt.

7. Verfahren nach einem der vorhergehenden Ansprüche, dadurch gekennzeichnet, daß das Reckverhältnis beim ersten Reckschritt zwischen 5/1 und 20/1 liegt.

8. Verfahren nach Anspruch 7, dadurch gekennzeichnet, daß das Reckverhältnis beim ersten Reckschritt 8/1 ist.

9. Verfahren nach einem der vorhergehenden Ansprüche, dadurch gekennzeichnet, daß das Reckverhältnis beim Zweiten Reckschritt 4/1 ist.

10. Poröses PTFE-Band von kristalliner Struktur, dessen Volumenmasse zwischen 0,2 und 0,12 $g/cm^3$ beträgt.

FIG.1a

FIG. 1b

EP 0 590 002 B1

FIG.1c

RAPPORT D'ÉTIRAGE

DENSITÉ

EP 0 590 002 B1

18

FIG.1d

FIG. 2

FIG.3a

File: 00200.001   TMA   METTLER
Ident:  1.0

2.036 mm          T iso: 150.0 °C

Iso temp.       150 °C
Durée iso   15.00 min
Charge       0.05 N
Charge Dyn. 0.00 N

EP 0 590 002 B1

FIG.3b

1.965 mm          T iso: 30.0 °C

File: 00005.001   TMA   METTLER
Ident: 1.0

Iso temp.      30 °C
Time iso 599.70 min
Load          0.05 N
Dyn. load   0.00 N

100. μm

0.        100.       200.       300.       400.       500.      Min

EP 0 590 002 B1

# FIG.4

EP 0 590 002 B1